# EUROPEAN PATENT APPLICATION

(11) **EP 4 166 232 A1**
(43) Date of publication of application: **19.04.2023**
(21) Application number: 21202883.1
(22) Date of filing: 15.10.2021
(51) Int. Cl.: B01L 7/00, B01L 9/00, A01N 1/02, G01N 1/42, G01N 23/20025, G02B 21/24

(54) **STORAGE CONTAINER FOR STORING A SAMPLE HOLDER**

(71) Applicant: Leica Mikrosysteme GmbH, 1170 Wien (AT)
(72) Inventor: Plank, Heinz, 2351 Wiener Neudorf (AT); Lihl, Reinhard, 1120 Wien (AT)
(74) Representative: DehnsGermany Partnerschaft von Patentanwälten

(57) **Abstract**

The present invention relates to a storage container (100) for storing a sample holder (200) under cryogenic temperatures, the storage container (100) comprising a storage container body (110) having an opening (112) for receiving the sample holder (200) in the interior of the storage container body (110), and a lid (120) for closing said opening (112), the storage container (100) further comprising a predefined leak allowing cryogenic gas to pass through the leak from the interior of the storage container (100).

## Description

### Technical field

The present invention relates to a storage container for storing a sample holder under cryogenic temperatures, more particularly to a storage container for storing a sample holder in the form of a sample grid or in the form of a cartridge holding one or more of such sample grids under cryogenic temperatures, particularly for use in cryo-microscopy.

### Background

Cryo-microscopy in the meaning of the present application particularly includes cryo-light microscopy and cryo-electron microscopy. Samples to be examined by cryo-microscopy are mostly prepared beforehand by a method called cryofixation. In this method, a water-containing sample is frozen very quickly (cryofixed) to a temperature of less than - 150° C, i.e. it is cooled very rapidly in order to avoid the formation of ice crystals. Cryofixation has proven to be particularly suitable for investigations of structural biology. The objects to be investigated, for examples cells, enzymes, viruses, or lipid layers, thereby become embedded in a thin, vitrified ice layer. The great advantage of cryofixation is that the biological structures can be obtained in their natural state. For example, a biological process can be halted at any point in time by cryofixation, and investigated in that vitrified state, for example in a cryo-electron microscope but also in a light microscope with corresponding sample cooling. In this context, cryo-light microscopy serves principally to locate relevant regions of the sample (regions of interest), which can be noted and then re-localised and viewed in more detail in a cryo-electron microscope.

In order not to impair the quality of the frozen samples, it is advantageous that they be transferred in cooled and contamination-free, particularly water-free, fashion between the processing units being used, for example a cryofixation device, a freeze fracture apparatus, and a coating apparatus, and the analytical devices, in this case principally a cryo-light microscope and a cryo-electron microscope. Sample transfer devices also referred to as "shuttles", such as disclosed in US 10,144,010 B2, can be used to transfer a sample under cryogenic conditions between said processing units and/or analysing units.

Cryofixation as discussed above may be done on the sample carried by a sample carrier, also called sample grid. In a next step, the sample carrier/grid carrying the vitrified sample is loaded into a sample holder. Depending on the type of sample carrier/grid one or more such sample carriers/grids may be placed onto or loaded into a sample holder or cartridge. A corresponding sample holder is disclosed in EP 3 385 771 A1.

The grids are preferably loaded into the cartridge and/or the cartridge carrying the grid(s) is preferably loaded into a sample transfer device in an atmosphere of cold vaporized cryogenic liquid, particularly liquid nitrogen. To this end, sample holder transfer devices may provide such an atmosphere of cold vaporized cryogenic liquid.

As discussed above, in cryo-microscopy, vitrified samples need to be stored safely without the risk of losing or damaging them, e.g. by contamination or devitrification. For good results in the cryo-microscopy workflow, the sample carrier/grid has to be picked up in the right spatial orientation as mostly no adjustment of the sample carrier orientation is possible after it has been loaded into its position on the sample holder/cartridge. If the sample carrier/grid is handled without a fixed orientation, it is necessary to restore the orientation of the sample in following preparation steps. This can be done e.g. by additional imaging steps, which, however, increase the risk of contamination. Furthermore, the cryo-microscopy workflow becomes more time-consuming.

### Summary

An object of the present invention is to provide an improved storage container for storing a sample holder under cryogenic temperatures.

The object is solved by a storage container according to claim 1. The storage container comprises a storage container body having an opening for receiving the sample holder in the interior of the storage container body, and a lid for closing said opening, the storage container further comprises a predefined leak allowing cryogenic gas to pass through the leak from the interior of the storage container body. The "sample holder" may, in principle, be any sample holder configured to carry or receive or hold a sample. More particularly, the sample holder may be a sample holder used in cryo-microscopy. More particularly, the sample holder may be a sample carrier like a sample grid, which may carry a vitrified sample or, even more particularly, may be a sample holder or cartridge holding such a sample carrier like a sample grid. Without limitation, in the following, the term "sample holder" particularly refers to sample holders or cartridges holding at least one sample carrier or sample grid.

The term "storage container body" includes any container or receptacle or tank configured to be handled under cryogenic temperatures, preferably configured to be filled, at least partly, with a cryogenic liquid such as liquid nitrogen. The term "lid" refers to any closure including a cap, cover, door, for closing the opening of the storage container body.

The storage container comprises a predefined leak allowing cryogenic gas to pass through the leak from the interior of the storage container. The term "predefined leak" includes any kind of opening in the form of a through-hole, a nozzle, a vent, an aperture, an orifice, etc. With such a predefined leak it is possible to vent cryogenic gas, particularly vaporized cryogenic liquid, out of the interior of the storage container in predefined amounts and/or, especially, if the internal pressure of the storage container exceeds a predefined threshold. In this context, it is noted that the factor of expansion of vaporized cryogenic gas in relation to liquefied cryogenic gas is many times greater than the expansion factors of other vaporized liquids.

The predefined leak may be a single leak or a combination of different leaks. Some types of leaks, which can be used alone or in combination, are discussed below in preferred embodiments.

In an embodiment of the present invention, as at least a part of the predefined leak at least one through-hole is formed in at least one of the lid and the storage container body. The form and/or the diameter of the through-hole can be configured to provide a predefined leak suited for venting a predefined amount of cryogenic gas and/or for venting cryogenic gas when the internal pressure exceeds a predefined threshold. In this embodiment, it is preferred if at least one of the at least one through-hole is provided with a spring valve.

The term "spring valve" includes any leaf spring valve or any spring-ball-valve comprising a spring biased against a ball. Such spring valves are suited for providing a predefined leak, especially if the internal pressure exceeds a predefined threshold.

It should be noted that, in some embodiments, it is preferred if no leak, particularly no through-hole is formed in the lid itself or at its top surface as at least a part of said predefined leak. Especially in applications in cryo-microscopy as discussed above a through-hole or other openings/apertures in the lid of a storage container may prove disadvantageous.

In another embodiment, a contact area between the lid and the opening of the storage container body comprises at least one gas release as at least a part of said predefined leak. This embodiment is particularly useful in embodiments where no through-hole (or other leak) is formed in the lid of the storage container. The term "gas release" may include any recess or passage opening configured to interrupt the connection between the lid and the opening of the storage container body. Such a gas release may be provided at the circumferential outside of the lid adjacent to the opening and/or in the opening adjacent to the lid. Thus, strictly speaking, the lid may be configured for only partly closing the opening of the storage container body as the closure or lock or seal between lid and container body, in this embodiment, is interrupted in a predefined way to provide a predefined leak.

In an embodiment, a closure of the lid and the opening of the storage container body is formed as a threaded closure, the core hole diameter of the thread in the opening of the storage container body being different to the diameter of the corresponding thread of the lid such that at least a part of the predefined leak is formed. Due to the difference in the thread diameters, a space or gap is created, through which cryogenic gas can pass through. The lid, in this embodiment, may be configured as a screw top. In case the lid has an external thread, it is preferred if the core hole diameter of the thread in the opening of the storage container body is greater than the diameter of the corresponding thread of the lid. If the lid has an internal thread covering a part of the outside of the opening of the storage container body, it is preferred if the diameter of the internal thread of the lid is greater than the diameter of the external thread in the opening of the storage container body in order to provide said predefined leak.

In an embodiment, the storage container body is dimensioned such that, when the sample holder is received in the interior of the storage container body and the lid is closing the opening of the storage container body, the bottom side of the lid has a predetermined distance to the top side of the sample holder. This embodiment makes sure that, in the closed state, particularly if the sample holder carries a vitrified sample, particularly on a sample carrier, there is a sufficient distance between the sample and the bottom side of the lid. Also, such a distance corresponds to a predefined volume for an accumulation of cryogenic gas, particularly vaporized cryogenic liquid.

In an embodiment, the interior of the storage container body is configured to fix the sample holder on its place inside the storage container body. This embodiment prevents any movements of the sample holder inside the storage container when the storage container itself is moved. If the sample holder holds the sample or a sample carrier carrying a sample, this embodiment avoids a movement and an abutting of the sample holder against the inner walls of the storage container. A combination with the previously discussed embodiment is particularly useful to avoid the sample holder abutting against the lid in case of movements or a rotation of the storage container.

In a particularly useful embodiment, the outer contour of the storage container is configured to provide a spatial orientation of the storage container. Especially in case of using a sample holder carrying a sample in a fixed or known orientation, it is advantageous to also use a storage container having a known spatial orientation such that the orientation of the sample can easily be restored. To this end, the outer contour of the storage container, for example its outer sidewalls and/or its bottom side and/or its top side is formed with areas of a geometry different from the remaining geometry of the outer sidewall surface/bottom surface/top surface such that the required spatial orientation of the storage container can be provided. Additionally or alternatively, visual markers can be used to provide this spatial orientation.

In an embodiment, the outer contour of the storage container is configured to provide a rotation lock of the storage container. Such a rotation lock can particularly avoid rotation of the storage container when placed in another handling device such as a sample transfer device or shuttle. This embodiment makes possible to place the storage container in a known orientation into such a storage container handling device, the storage container itself including the sample holder in a known orientation. The configuration of the outer contour of the storage container in this embodiment may be the same as the configuration of the outer contour to provide a spatial orientation. It is particularly useful to have a deviation in geometry of the outer contour limited to an area at the outer surface of the storage container. In a preferred embodiment, the outer contour of the sidewall of the storage container includes at least one flat area in an otherwise cylindrical contour. This example and other examples are described in the detailed description below.

In an embodiment, the storage container is, at least partly, made of metal, preferably of aluminium. Metals, particularly aluminium, provide a light material resistant to cryogenic temperatures.

In another embodiment, the outer surface of the lid comprises at least two blind bores. Such blind bores are particularly configured to match or couple or engage with a lid opening instrument like a pair of tweezers for opening and/or closing the lid. It might be preferable to provide different pairs of blind bores for different kinds of instruments/tweezers. These or additional blind bores may be provided configured to match with a gripping instrument, like a pair of tweezers, for gripping the sample holder by its lid. This embodiment facilitates handling of the storage container.

In another embodiment, the outer dimension of the storage container is configured such that it fits into a 50ml tube. Such tubes can be used to store one or more storage containers, for instance, in a Dewar vessel.

On the other hand, it may be advantageous if the outer dimension of the storage container is configured such that the storage container can be inserted into a cryostat or into a Dewar vessel. This is particularly useful if the storage container itself is directly stored in a cryostat or in a Dewar vessel.

It should be noted that the above features of the embodiments of the present invention can - wholly or in part - be combined to achieve other embodiments still falling under the scope of the present invention as defined in the appended claims.

As used herein, the term "and/or" includes any and all combinations of one or more of the associated listed items and may be abbreviated as "/".

Although some aspects have been described in the context of an apparatus or device, it is clear that these aspects also represent a description of a method of operating such an apparatus or device.

Further embodiments and their advantages are described below in connection with the following figures.

### Short description of the figures

- Figure 1: schematically shows a storage container according to an embodiment of the present invention; and
- Figure 2: schematically shows a storage container body according to an embodiment of the present invention, the storage container body storing a sample holder holding sample carriers.

### Detailed description

In the following, the figures are described comprehensively, same reference signs designating same or at least structurally identical components.

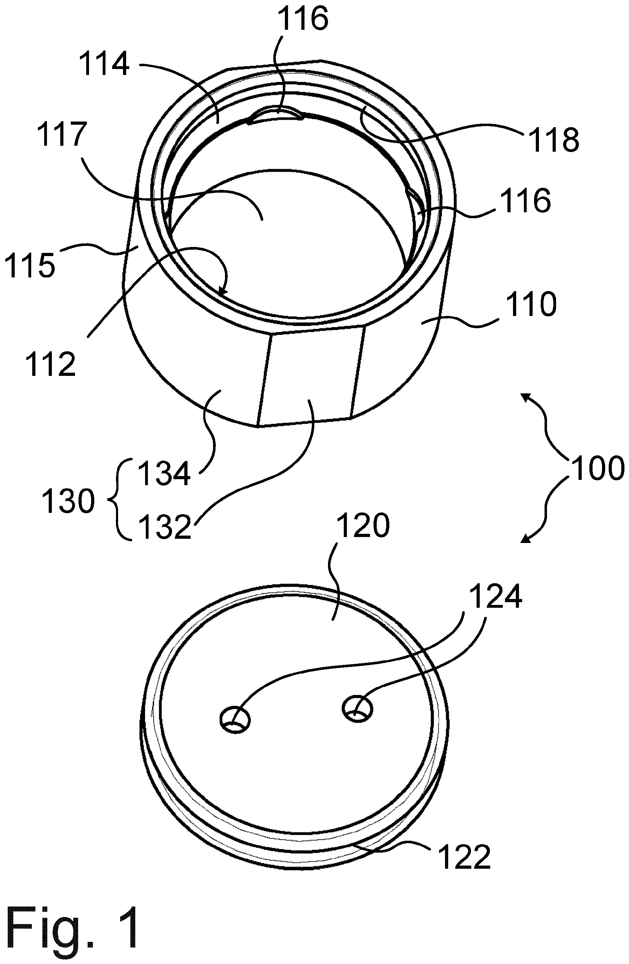

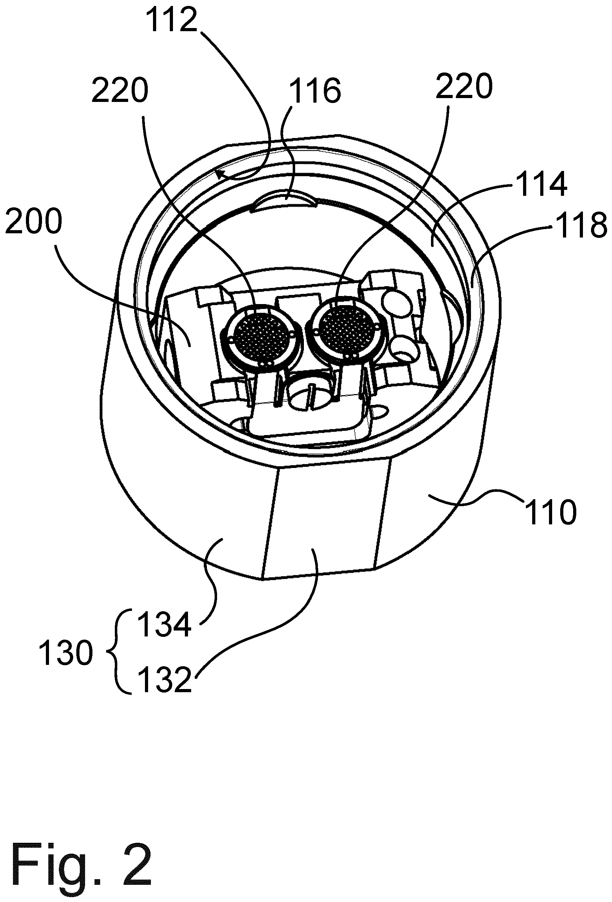

Figure 1 schematically shows a storage container 100 for storing a sample holder such as a sample carrier used to examine a sample in microscopy, particularly for storing a sample carrier such as a sample grid used in cryo-microscopy in order to transfer a vitrified sample between processing units, like a cryofixation device, a freeze fracture apparatus, a coating apparatus, and/or between analytical devices, like a cryo-light microscope or a cryo-electron microscope. Even more particularly, the storage container 100 is configured for storing a sample holder like a cartridge used in cryo-microscopy, as already described above, for holding at least one sample grids (see also embodiment of Figure 2).

The storage container 100 comprises a storage container body 110 having an opening 112 for receiving the sample holder (see also Figure 2) in the interior of the storage container body 110, and a lid 120 for closing the opening 112 of the storage container body 110. The storage container 100 further comprises a predefined leak allowing cryogenic gas to pass through the leak from the interior of the storage container 100.

The predefined leak particularly serves the purpose of enabling vaporized cryogenic liquid to pass through the leak, and thus to avoid excessive overpressure or even a danger of explosion. In use of the storage container 100, cryogenic liquid like liquid nitrogen may be filled, at least partly, into the interior of the storage container body 110 in order to cool the sample holder 200 (see Figure 2) and/or such cryogenic liquid penetrates into the interior of the storage container 100 when the storage container 100 is e.g. stored in a cryostat or a Dewar vessel.

The storage container body 110 as shown in this embodiment is of essentially cylindrical form having a (closed) bottom side and the lid 120 forming its top side. Generally, other geometries may be suited for other embodiments of storage containers. The lid 120, in this embodiment, is configured as a separate unit, it may, however, also be configured as a door, which may be connected to the storage container body 110. In this embodiment the container body 110 comprises an essentially cylindrical ring 115 with a round bottom 117. The ring 115 and the bottom 117 are an integral piece. In a further embodiment these may also be separate parts to be connected to each other to form the container body 110. In a further embodiment ring 115 and bottom 117 may also have different shapes or forms (e.g. elliptical, rectangular, square etc.)

The predefined leak, in this embodiment, is a combination of different leaks. It is noted that no leak, particularly no through-hole, is formed in the lid 120 itself, particularly not in the top surface of the lid 120. There may, however, be two blind bores 124, which are particularly configured to match/couple/engage with a lid opening instrument like a pair of tweezers. Such an instrument may be used for opening and/or closing the lid 120. At the same time, such an instrument may be used for gripping the sample holder 100 by its lid 120 in order to move the storage container 100 from one place to another, e.g. for inserting or removing the storage container 100 into or out of a Dewar vessel.

In the embodiment shown in Figure 1, the predefined leak may be one or more gas releases 116 formed in a contact area 114 between the lid 120, when closing the storage container 100, and the opening 112 of the storage container body 110. In the example shown, four gas releases 116 are arranged circumferentially in equal distances. Each gas release 116 may comprise a recess formed in the contact area 114 of the storage container body 110 and/or a recess or another recess in a contact area of the lid 120, particularly in corresponding positions around the circumference of the opening 112 in order to enlarge a gas release 116 as shown in Figure 1. By the gas releases 116, the connection between the lid 120 and the storage container body 110, in its closed state, is partly interrupted such that a predefined leak is formed. Number, form and size of the gas releases 116 determine the amount of cryogenic gas being able to vent through the corresponding leak at a given internal pressure.

In the embodiment shown in Figure 1, the storage container 100 may be configured such that a closure of the lid 120 and the opening 112 of the storage container body 110 is formed as a threaded closure. The lid, in this embodiment, may be configured as a screw top having an external thread 122, while the corresponding thread 118 in the opening part of the storage container body 110 is an internal thread. Alternatively or additionally to the predefined leak formed by the gas releases 116, a predefined leak can be realised by the core hole diameter of the thread 118 in the opening 112 of the storage container body 110 being greater than the diameter of the corresponding thread 122 of the lid 120. Although such a thread closure provides a mechanical closure of the storage container 100, it does not provide a sealed connection between lid 120 and storage container body 110 such that a predefined leak is formed through which cryogenic gas from the interior of body 110 can vent to the outside. In this embodiment, the gas releases 116 enlarge the amount of gas being able to pass through the space or gap between the threads 118 and 122.

As can be further seen from Figure 1, the outer contour 130 of the storage container 100, particularly the outer contour 130 of its sidewalls, is configured to provide a spatial orientation of the storage container 100, which spatial orientation may be achieved by at least one flat area 132 in an otherwise cylindrical contour 134. This embodiment will be further described in connection with Figure 2 below.

The spatial orientation may additionally or alternatively also be provided at or in the outer contour of the lid 120 or of the bottom side of the storage container body 110. Further, a visual spatial orientation may be provided, e.g. by markers.

The outer contour 130 of the storage container 100 may further be configured to provide a rotation lock of the storage container 100. When the storage container 100 is, for instance, placed in another handling device, such as a sample transfer device/shuttle, the loading station in this handling device may have a geometric form at least partly corresponding to the outer contour of the storage container 100 such that the storage container 100 matches with the corresponding slot or insert of the loading station. In the embodiment of Figure 1, the rotation lock may be realised by the at least one flat area 132 in an otherwise cylindrical contour 134. The flat area 132 may abut a flat inner surface of a handling device to provide both spatial orientation and rotation lock of the storage container 100.

Figure 2 schematically shows a storage container body 110 storing a sample holder 200 holding two sample carriers 220. As in the embodiment of Figure 1, the storage container 100 may be configured to provide a spatial orientation of the storage container 100 and, at the same time, to provide a rotation lock of the storage container 100 by having at least one flat area 132 in an otherwise cylindrical outer contour 134. With such a configuration, the storage container 100, particularly the storage container body 110, can be fixedly placed in a defined orientation into another handling device such as a sample transfer device or shuttle.

Preferably, the storage container body 110 is dimensioned such that, when the sample holder 200 is received in the interior of the storage container body 110 and the lid 120 is closed, the bottom side of the lid 120 has a predetermined distance to the top side of the sample holder 200, particularly to the sample carrier/grid 220. This makes sure that there is sufficient distance between the sample on the sample grid 220 and the bottom side of the lid. The corresponding volume created by this distance is particularly suitable for an accumulation of vaporized cryogenic liquid.

In another embodiment, the interior of the storage container body 110 is, particularly additionally, configured to fix the sample holder 200 on its place inside the storage container body 110. This embodiment prevents any movements of the sample holder 200 inside the storage container 100 when the storage container itself is moved, e.g. when being transferred into a sample transfer device/shuttle or another handling device, or into a cryostat/Dewar vessel.

It should be noted that areas and/or elements providing spatial orientation and rotation lock, particularly when opening or closing the lid 120, may be provided, for instance, alternatively or additionally at the bottom side of the storage container body 110, e.g. by a protrusion at the bottom side, which protrusion defines the orientation, at which the storage container 100 can be placed into a corresponding recess in another handling device or storage device.

Embodiments of a storage container are therefor able to keep unchanged a given spatial orientation of a sample carrier 220 by maintaining the orientation of both the sample holder 200 and the storage container 100.

### Reference signs

- 100: storage container
- 110: storage container body
- 112: opening
- 114: contact area
- 115: cylindrical ring
- 116: gas release
- 117: round bottom
- 118: thread
- 120: lid
- 122: thread
- 124: blind bore
- 130: outer contour
- 132: spatial orientation, flat area
- 134: cylindrical contour

- 200: sample holder
- 220: sample carrier

## Claims

1. A storage container (100) for storing a sample holder (200) under cryogenic temperatures, the storage container (100) comprising a storage container body (110) having an opening (112) for receiving the sample holder (200) in the interior of the storage container body (110), and a lid (120) for closing said opening (112),
the storage container (100) further comprising a predefined leak allowing cryogenic gas to pass through the leak from the interior of the storage container (100).

2. The storage container (100) according to claim 1, wherein said storage container body (110) is configured to be filled, at least partly, with a cryogenic liquid.

3. The storage container (100) according to claim 1 or 2, wherein no leak is formed in the lid (120) or in a top surface of the lid (120).

4. The storage container (100) according to claim 1 or 2, wherein as at least a part of the predefined leak at least one through-hole is formed in at least one of the lid (120) and the storage container body (110).

5. The storage container (100) according to claim 4, wherein at least one through-hole is provided with a spring valve.

6. The storage container (100) according to any one of the preceding claims, wherein a contact area (114) between the lid (120) and the opening (112) of the storage container body (110) comprises at least one gas release (116) as at least a part of said predefined leak.

7. The storage container (100) according to any one of the preceding claims, wherein a closure of the lid (120) and the opening (112) of the storage container body (110) is formed as a threaded closure, the core hole diameter of the thread (118) in the opening (112) of the storage container body (110) being different to the diameter of the corresponding thread (122) of the lid (120) such that at least a part of the predefined leak is formed.

8. The storage container (100) according to any one of the preceding claims, wherein the interior of the storage container body (110) is configured to fix the sample holder (200) on its place inside the storage container body (110).

9. The storage container (100) according to any one of the preceding claims, wherein the storage container body (110) is dimensioned such that, when the sample holder (200) is received in the interior of the storage container body (110) and the lid (120) is closing the opening (112) of the storage container body (110), the bottom side of the lid (120) has a predetermined distance to the top side of the sample holder (200).

10. The storage container (100) according to any one of the preceding claims, wherein an outer contour (130) of the storage container (100) is configured to provide a spatial orientation (132) of the storage container (100).

11. The storage container (100) according to any one of the preceding claims, wherein an outer contour (130) of the storage container (100) is configured to provide a rotation lock of the storage container (100).

12. The storage container (100) according to claim 10 or 11, wherein the outer contour (130) includes at least one flat area (132) in an otherwise cylindrical contour (134).

13. The storage container (100) according to any one of the preceding claims, wherein the storage container (100) is, at least partly, made of metal or aluminium.

14. The storage container (100) according to any one of the preceding claims, wherein the outer surface of the lid (120) comprises at least two blind bores (124).

15. The storage container (100) according to any one of the preceding claims, wherein the outer dimension of the storage container (100) is configured such that it fits into a 50ml tube.

16. The storage container (100) according to any one of the preceding claims, wherein the outer dimension of the storage container (100) is configured such that the storage container (100) can be inserted into a cryostat or into a Dewar vessel.
